# EUROPEAN PATENT APPLICATION

(11) **EP 4 191 163 A1**
(43) Date of publication of application: **07.06.2023**
(21) Application number: 21850557.6
(22) Date of filing: 30.06.2021
(51) Int. Cl.: F25B 5/02, F25B 27/00, F25B 27/02, F25B 1/00, F24F 11/46, F24F 11/88, F24F 1/44, F25B 49/02

(54) **HEAT PUMP DEVICE**

(30) Priority: 28.07.2020 JP 2020127768
(71) Applicant: Yanmar Holdings Co., Ltd., Osaka-shi, Osaka (JP)
(72) Inventor: IMOTO, Shota, Osaka-shi, Osaka 530-0014 (JP); MATSUSHITA, Satoshi, Osaka-shi, Osaka 530-0014 (JP); TANAKA, Yuichiro, Osaka-shi, Osaka 530-0014 (JP); KIMURA, Kengo, Osaka-shi, Osaka 530-0014 (JP); KAMODA, Soichiro, Osaka-shi, Osaka 530-0014 (JP); AIKAWA, Terunori, Osaka-shi, Osaka 530-0014 (JP); IWAMI, Takuma, Osaka-shi, Osaka 530-0014 (JP)
(74) Representative: Novagraaf International SA
(86) International application number: PCT/JP2021/024798
(87) International publication number: WO 2022/024650

(57) **Abstract**

A heat pump device (1) is provided with: a compressor (22); an engine (31); a power generator (32); and a motor (21). The compressor (22) pressurizes a refrigerant. The power generator (32) is driven by the engine (31). The motor (21) operates with power generated by the power generator (32). In addition, the motor (21) drives the compressor (22).

## Description

### TECHNICAL FIELD

The present invention relates to a heat pump device including an engine and a compressor.

### BACKGROUND ART

Generally, a heat pump device includes a heat pump unit having a compressor and an engine that drives the compressor (see, e.g., Patent Document 1). The engine operates using, e.g., city gas or gasoline as fuel. The heat pump device is used as a device that adjusts the amount of heat of air in an air conditioner.

### PRIOR ART DOCUMENT

### PATENT DOCUMENT

Patent Document 1: JP-A-2006-250438

### SUMMARY OF INVENTION

### TECHNICAL PROBLEM

The output of the compressor needs to be adjusted according to variation in a load in the air conditioner, such as a required amount of heat. In a case where the engine directly drives the compressor, the output of the engine needs to be adjusted according to the load variation.

On the other hand, if the output of the engine deviates from a specific output range, the energy efficiency of the engine is degraded. Thus, when the output of the engine is adjusted according to variation in a load in the heat pump unit, the energy efficiency of the engine is degraded.

An object of the present invention is to provide a heat pump device capable of operating an engine with a high efficiency even in a case where a load varies.

### SOLUTION TO PROBLEM

A heat pump device according to one aspect of the present invention includes a compressor, an engine, a power generator, and a motor. The compressor pressurizes refrigerant. The power generator is driven by the engine. The motor operates with power generated by the power generator, and drives the compressor.

### ADVANTAGEOUS EFFECTS OF INVENTION

According to the present invention, the heat pump device capable of operating the engine with a high efficiency even in a case where the load varies can be provided.

### BRIEF DESCRIPTION OF DRAWINGS

Fig. 1 is a block diagram showing a configuration of a heat pump device according to a first embodiment.
Fig. 2 is a block diagram showing configurations of a decompression unit and a battery cooling device in the heat pump device according to the first embodiment.
Fig. 3 is a block diagram showing a configuration of a heat pump device according to a second embodiment.
Fig. 4 is a block diagram showing a configuration of a heat pump device according to a third embodiment.

### DESCRIPTION OF EMBODIMENTS

Hereinafter, embodiments of the present invention will be described with reference to the drawings. Note that the following embodiments are embodied examples of the present invention and do not limit the technical scope of the present invention.

### [First Embodiment]

A heat pump device 1 according to a first embodiment includes a heat pump unit 2, an engine 31, a main control device 6, and an operation unit 60.

The engine 31 operates using, e.g., city gas or gasoline as fuel. The engine 31 is a power source for the heat pump unit 2. The heat pump unit 2 is used as a device that adjusts the amount of heat of air in an air conditioner. Note that the heat pump unit 2 may be used for heating or cooling liquid such as water.

The main control device 6 includes a processor such as a central processing unit (CPU), a main storage device such as a random access memory (RAM), and a secondary storage device such as a read only memory (ROM) or a flash memory.

The processor expands a computer program, which is stored in the secondary storage device, into the main storage device, and further executes the computer program. Accordingly, the main control device 6 controls control target equipment such as a not-shown cell motor included in the engine 31 and not-shown various valves included in the heat pump unit 2.

The operation unit 60 is a device that receives user's operation. For example, the operation unit 60 includes a touch panel, an operation button and the like. The main control device 6 also executes a processing of selecting various operation modes according to operation on the operation unit 60.

The heat pump unit 2 includes a compressor 22, a four-way valve 23, an outdoor heat exchanger 24, an indoor heat exchanger 25, and a decompression unit 26 coupled to each other through a refrigerant pipe. The refrigerant pipe is a pipe in which refrigerant flows. The decompression unit 26 includes a main expansion valve 26a and a receiver 26b. The compressor 22 pressurizes the refrigerant.

The indoor heat exchanger 25 is arranged in a room, and exchanges heat between the refrigerant and indoor air in a refrigerant circulation path extending through the compressor 22. The indoor air is one example of utilization fluid, and the indoor heat exchanger 25 is one example of a first heat exchanger.

The outdoor heat exchanger 24 is arranged outside the room, and exchanges heat between the refrigerant and outdoor air in a refrigerant circulation path extending through the compressor 22 and the indoor heat exchanger 25. The outdoor air is one example of open fluid, and the outdoor heat exchanger 24 is one example of a second heat exchanger.

The decompression unit 26 is arranged between the indoor heat exchanger 25 and the outdoor heat exchanger 24 on the refrigerant circulation path of the heat pump unit 2, and decompresses the refrigerant.

In the decompression unit 26, the main expansion valve 26a decompresses the high-pressure refrigerant into an easily-evaporable state. The receiver 26b temporarily stores the refrigerant, and separates gas and liquid in the refrigerant.

The heat pump unit 2 operates in an air-cooling mode or an air-heating mode in a case where the heat pump unit 2 is used as the device that adjusts the amount of heat of the indoor air in the air conditioner. The main control device 6 controls the four-way valve 23 to operate the heat pump unit 2 in the air-cooling mode or the air-heating mode. The main control device 6 selects one of the air-cooling mode or the air-heating mode according to operation on the operation unit 60.

In a case where the heat pump unit 2 operates in the air-cooling mode, the heat pump unit 2 causes the refrigerant to circulate in the four-way valve 23, the outdoor heat exchanger 24, the decompression unit 26, and the indoor heat exchanger 25 in this order from the compressor 22.

In a case where the heat pump unit 2 operates in the air-heating mode, the heat pump unit 2 causes the refrigerant to circulate in the four-way valve 23, the indoor heat exchanger 25, the decompression unit 26, and the outdoor heat exchanger 24 in this order from the compressor 22.

The output of the compressor 22 needs to be adjusted according to variation in a load in the air conditioner, such as a required amount of heat. If the engine 31 directly drives the compressor 22, the output of the engine 31 needs to be adjusted according to the load variation.

On the other hand, if the output of the engine 31 deviates from a specific output range, the energy efficiency of the engine 31 is degraded. Thus, when the output of the engine 31 is adjusted according to variation in a load in the heat pump unit 2, the energy efficiency of the engine 31 is degraded.

The heat pump device 1 has a configuration in which the engine 31 can operate with a high efficiency even in a case where the load in heat pump unit 2 varies. Hereinafter, such a configuration will be described.

The heat pump device 1 further includes a power generator 32, a power adjustment circuit 4, and a battery 5. The power generator 32 is driven by the engine 31. The engine 31 and the power generator 32 form an engine-driven power generator 3.

The engine 31 operates at a preset constant output. For example, the engine 31 operates at a rated output. That is, the engine 31 performs steady-state operation without adjusting the output according to the load in the heat pump unit 2. Accordingly, the engine 31 operates at an output with a high energy efficiency.

The heat pump unit 2 includes a motor 21 that drives the compressor 22 and a motor drive circuit 20 that supplies power to the motor 21. The motor drive circuit 20 rotatably drives the motor 21 by outputting the supplied power to the motor 21.

The motor drive circuit 20 adjusts the power to be supplied to the motor 21 by feedback control according to a difference between a preset target temperature and an indoor temperature detected by a not-shown temperature sensor.

The power adjustment circuit 4 includes an AC/DC converter 41 and a battery control circuit 42. The AC/DC converter 41 converts AC power generated by the power generator 32 into DC power, and adjusts an output voltage to an input voltage of the motor drive circuit 20.

The power generated by the power generator 32 is supplied to the motor drive circuit 20 of the heat pump unit 2 through the AC/DC converter 41. The power consumption of the motor drive circuit 20 corresponds to the power consumption of the motor 21, and therefore, corresponds to the power consumption of the heat pump unit 2.

The AC/DC converter 41, the battery control circuit 42, and the motor drive circuit 20 are electrically connected to each other through a main conductive unit 2x. The main conductive unit 2x is a unit to which power available for the heat pump device 1 is output, and is a power supply line to an electric load such as the motor 21. In the following description, the power output to the main conductive unit 2x will be referred to as available power.

The power generated by the power generator 32 is output to the main conductive unit 2x through the AC/DC converter 41, and is further supplied from the main conductive unit 2x to the motor 21 through the motor drive circuit 20. The motor 21 driven by the motor drive circuit 20 is one example of the electric load.

Of the available power including the power generated by the power generator 32, power remaining after power consumption by the heat pump unit 2 is input to the battery control circuit 42.

That is, the power generated by the power generator 32 is supplied to the motor drive circuit 20 of the heat pump unit 2 and the battery control circuit 42 through the AC/DC converter 41 and the main conductive unit 2x.

The battery control circuit 42 can selectively execute charge control and discharge control. The battery control circuit 42 is one example of a battery control unit.

The charge control is a processing of causing the battery 5 to store surplus power obtained by excluding the power supplied to the electric load including the motor 21 from the available power including the power generated by the power generator 32. In the present embodiment, the battery control circuit 42 executes the charge control while the engine 31 is operating.

The discharge control is a processing of outputting, as the available power, electricity stored in the battery 5 to the main conductive unit 2x. In the discharge control, the battery control circuit 42 adjusts discharge power from the battery 5 according to the power consumption of the electric load. In the present embodiment, the battery control circuit 42 executes the discharge control while the engine 31 is stopped.

That is, the battery control circuit 42 executes the charge control or the discharge control such that the available power and the power consumption of the electric load connected to the main conductive unit 2x are balanced.

Note that the available power is also supplied to, e.g., a not-shown electric valve included in the heat pump unit 2. The electric valve and the like are also examples of the electric load.

The motor 21 operates with the power generated by the power generator 32 while the charge control is being executed. The motor 21 operates with the power discharged from the battery 5 while the discharge control is being executed.

The battery control circuit 42 detects the amount of charge of the battery 5, and outputs a detection signal to the main control device 6. The main control device 6 executes engine operation control based on the detection signal indicating the amount of charge of the battery 5.

The engine operation control includes a processing of stopping the engine 31 when the amount of charge of the battery 5 exceeds a preset reference range. The engine operation control further includes a processing of starting the engine 31 when the amount of charge of the battery 5 falls below the reference range while the engine 31 is stopped.

Thus, the engine 31 stops until the amount of charge of the battery 5 falls below the reference range after the amount of charge of the battery 5 has exceeded the reference range, and operates until the amount of charge of the battery 5 exceeds the reference range after the amount of charge of the battery 5 has fallen below the reference range. Accordingly, the fuel consumption of the engine 31 is suppressed. The main control device 6 that executes the engine operation control is one example of an engine control unit.

As described above, in the heat pump device 1, the power of the engine 31 is converted into the power to be supplied to the motor 21 that drives the compressor 22. In a case where the load in the heat pump unit 2 varies, the output of the engine 31 is maintained at the rated output, and the surplus power which is not used for the motor 21 varies. The surplus power can be easily utilized for other applications.

In the present embodiment, the surplus power is stored in the battery 5 while the engine-driven power generator 3 is operating, and is utilized to drive the heat pump unit 2 while the engine-driven power generator 3 is stopped. Thus, the engine 31 can constantly operate with a high efficiency even in a case where the load in heat pump unit 2 varies.

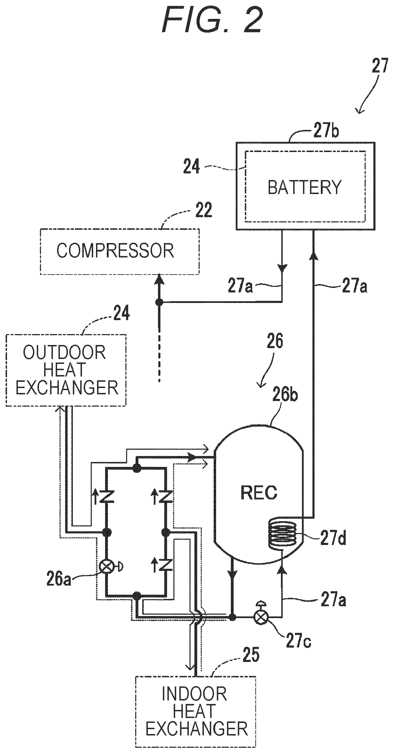

The heat pump device 1 further includes a battery cooling device 27 that exchanges heat between the refrigerant in the heat pump unit 2 and the battery 5 (see Fig. 2). The battery cooling device 27 includes a refrigerant branching pipe 27a, a battery heat exchange unit 27b, and an auxiliary expansion valve 27c. Part of the refrigerant branching pipe 27a forms a subcooling (SC) coil 27d arranged in the receiver 26b.

In Fig. 2, the path and direction of the flow of the refrigerant in the decompression unit 26 when the heat pump unit 2 operates in the air-cooling mode are indicated by thin solid arrows. The path and direction of the flow of the refrigerant in the decompression unit 26 when the heat pump unit 2 operates in the air-heating mode are indicated by thin dashed arrows.

The refrigerant branching pipe 27a branches part of the refrigerant from the decompression unit 26, and guides the branched refrigerant to a refrigerant inlet of the compressor 22. An end of the refrigerant branching pipe 27a is coupled to an inflow pipe coupled to the inlet of the compressor 22.

The refrigerant branching pipe 27a is arranged through the receiver 26b and the battery heat exchange unit 27b. In the following description, the refrigerant flowing in the refrigerant branching pipe 27a will be referred to as branched refrigerant.

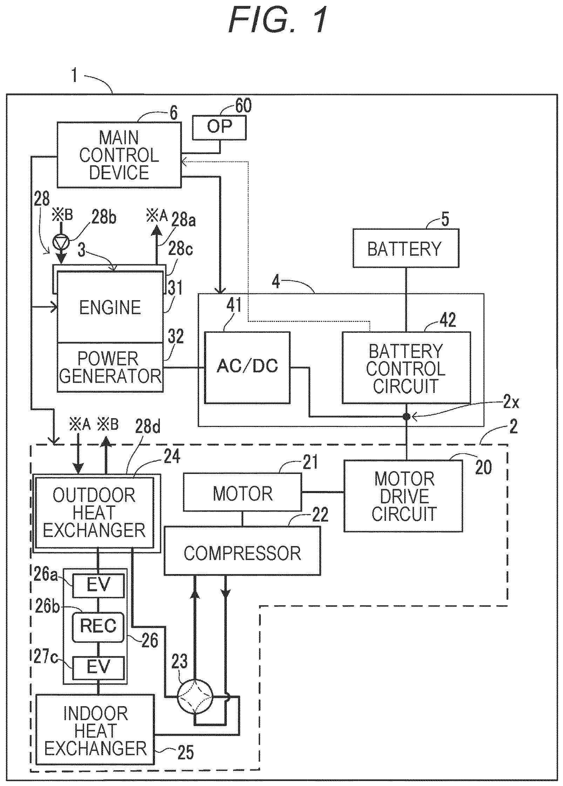

The auxiliary expansion valve 27c is arranged upstream of the SC coil 27d of the refrigerant branching pipe 27a in a flow direction of the branched refrigerant, and decompresses the branched refrigerant. The auxiliary expansion valve 27c is also part of a component of the decompression unit 26 (see Fig. 1).

The temperature of the branched refrigerant decreases through the auxiliary expansion valve 27c and the SC coil 27d. After having passed through the auxiliary expansion valve 27c and the SC coil 27d, the branched refrigerant further passes through the battery heat exchange unit 27b and returns to the compressor 22.

The battery heat exchange unit 27b is provided in the middle of the refrigerant branching pipe 27a, and exchanges heat between the branched refrigerant and the battery 5. Accordingly, the battery 5 is cooled by the branched refrigerant in a case where the heat pump unit 2 operates in either the air-cooling mode or the air-heating mode. As a result, degradation of the operation efficiency of the battery 5 due to an excessively-high temperature of the battery 5 can be avoided.

The heat pump device 1 further includes an engine cooling device 28 that cools the engine 31 by causing coolant to circulate (see Fig. 1). The engine cooling device 28 includes a coolant pipe 28a, a circulation pump 28b, an engine heat exchange unit 28c, an outdoor-unit heat exchange unit 28d, and a not-shown radiator.

The coolant pipe 28a is a pipe in which the coolant flows. The coolant pipe 28a is arranged through the engine heat exchange unit 28c, the outdoor-unit heat exchange unit 28d, and the radiator. The circulation pump 28b causes the coolant to circulate in a preset direction in the coolant pipe 28a.

The engine cooling device 28 sends, to the radiator, the coolant having exchanged heat with the engine 31 in the engine heat exchange unit 28c. Accordingly, the engine 31 is cooled by the coolant, and the high-temperature coolant is cooled by the radiator.

The engine cooling device 28 sends part or all of the coolant having exchanged heat with the engine 31 to the radiator through the outdoor-unit heat exchange unit 28d. The outdoor-unit heat exchange unit 28d exchanges heat between the coolant having exchanged heat with the engine 31 and the outdoor heat exchanger 24.

In the outdoor-unit heat exchange unit 28d, the refrigerant in the heat pump unit 2 is heated by the coolant in the engine cooling device 28. Accordingly, the energy efficiency of the heat pump unit 2 is further enhanced.

### [Second Embodiment]

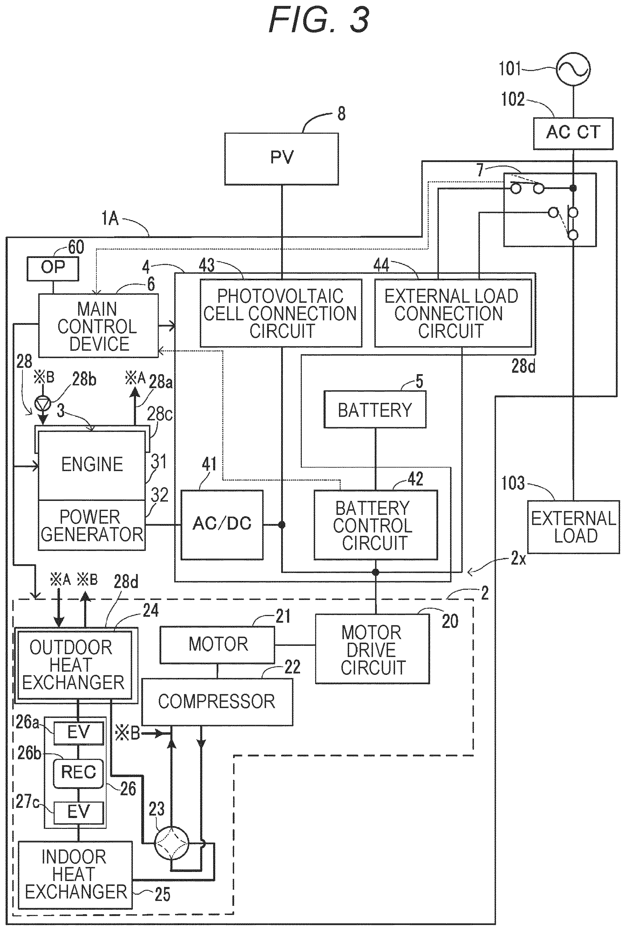

Next, a heat pump device 1A according to a second embodiment will be described with reference to Fig. 3. The heat pump device 1A has a configuration in which a photovoltaic cell connection circuit 43, an external load connection circuit 44, and a connection switching circuit 7 are added to the heat pump device 1. The photovoltaic cell connection circuit 43 and the external load connection circuit 44 form part of the power adjustment circuit 4.

The photovoltaic cell connection circuit 43 is an interface circuit electrically connected to a photovoltaic cell 8 that generates power from solar light energy. The photovoltaic cell connection circuit 43 outputs, as the available power, the power supplied from the photovoltaic cell 8 to the main conductive unit 2x. The photovoltaic cell 8 is one example of an external power source.

For example, the photovoltaic cell connection circuit 43 includes a DC/DC converter that converts an output voltage of the photovoltaic cell 8 into the input voltage of the motor drive circuit 20 while performing maximum power point tracking (MPPT) control.

Note that the solar light energy is one example of renewable energy, and the photovoltaic cell 8 is one example of an external power generator that generates power from the renewable energy. The photovoltaic cell connection circuit 43 is one example of an external power source connection unit that can be electrically connected to the external power source.

The external load connection circuit 44 is an interface circuit electrically connected to an external load 103 supplied with power from a commercial power source 101. The external load connection circuit 44 electrically connects a power supply line from the commercial power source 101 to the external load 103 with the main conductive unit 2x.

The external load connection circuit 44 supplies, in interconnection with the commercial power source 101, remaining power obtained by excluding the power utilized in the heat pump device 1 from the available power to the external load 103.

In the present embodiment, the external load 103 is one example of the electric load serving as a supply destination of the available power. The external load connection circuit 44 is one example of an external load connection unit.

The connection switching circuit 7 is a circuit that switches electrical connection among the power supply line from the commercial power source 101 to the external load 103, a power output line of the external load connection circuit 44, and the external load 103. The connection switching circuit 7 switches from an interconnection state to a disconnection state when the power from the commercial power source 101 is stopped.

The interconnection state is a state in which the power supply line of the commercial power source 101, the power output line of the external load connection circuit 44, and the external load 103 are electrically connected to each other.

The disconnection state is a state in which the power supply line of the commercial power source 101 and the external load connection circuit 44 are electrically disconnected from each other and the power output line of the external load connection circuit 44 and the external load 103 are electrically connected to each other.

When the connection switching circuit 7 is in the interconnection state, the external load connection circuit 44 supplies, in interconnection with the commercial power source 101, the remaining power obtained by excluding the power utilized in the heat pump device 1 from the available power to the external load 103. When the connection switching circuit 7 is in the disconnection state, the external load connection circuit 44 can also supply the utilization power to the external load 103.

On the other hand, when the connection switching circuit 7 is in the interconnection state, the external load connection circuit 44 supplies the available power to the external load 103 without interconnected with the commercial power source 101.

Regardless of whether the connection switching circuit 7 is in the interconnection state or the disconnection state, the battery control circuit 42 executes the charge control or the discharge control such that the available power and the power consumption of the electric load connected to the main conductive unit 2x are balanced.

The connection switching circuit 7 outputs, to the main control device 6, an interconnection signal indicating whether the connection switching circuit 7 is in the interconnection state or the disconnection state. The interconnection signal is also a signal indicating whether the commercial power source 101 is in a power-distributed state or a power-stopped state.

The main control device 6 executes heat pump operation control based on the amount of charge of the battery 5 in a case where the interconnection signal indicates the disconnection state.

The heat pump operation control includes a processing of stopping the heat pump unit 2 when the amount of charge of the battery 5 falls below a preset monitoring range. In a case where the heat pump unit 2 is stopped, the motor drive circuit 20 is also stopped, and a power supply to the motor 21 is also stopped. Accordingly, in a case where the amount of charge of the battery 5 decreases due to a high power consumption of the external load 103 or a small amount of power generation from the photovoltaic cell 8, the available power is supplied to the external load 103 in preference to the heat pump unit 2.

The heat pump operation control further includes a processing of cancelling the stop of the heat pump unit 2 when the amount of charge of the battery 5 exceeds the monitoring range under a situation where the heat pump unit 2 is stopped. Accordingly, in a case where the amount of charge of the battery 5 increases due to a low power consumption of the external load 103 or a great amount of power generation from the photovoltaic cell 8, the available power can be utilized for both the external load 103 and the heat pump unit 2.

The main control device 6 executes the engine operation control according to the amount of charge of the battery 5 regardless of whether the connection switching circuit 7 is in the interconnection state or the disconnection state.

Thus, in a case where the power generated by the photovoltaic cell 8 and the power generator 32 is greater than the power consumption of the electric load including the external load 103, the battery 5 supplies the power to the external load 103 instead of the power generator 32 until the amount of charge of the battery 5 falls below the reference range after having exceeded the reference range. Accordingly, the fuel consumption of the engine 31 is suppressed.

In a case where the heat pump device 1A is employed, operation with a higher degree of freedom than that in a case where the heat pump device 1 is employed is achieved.

The external load connection circuit 44 can output, as the available power, the power of the commercial power source 101 to the main conductive unit 2x under a situation where the connection switching circuit 7 is in the interconnection state. Thus, the external load connection circuit 44 includes an AC/DC converter that converts AC power of the commercial power source 101 into DC power which can be supplied to the motor drive circuit 20.

For example, in a case where the available power other than the power of the commercial power source 101 falls below the power consumption of the heat pump unit 2 under a situation where the connection switching circuit 7 is in the interconnection state, the external load connection circuit 44 outputs, as the available power, the power of the commercial power source 101 to the main conductive unit 2x. In this case, the external load connection circuit 44 outputs the power of the commercial power source 101 to the main conductive unit 2x such that the available power including the power of the commercial power source 101 and the power consumption of the heat pump unit 2 are balanced.

### [Third Embodiment]

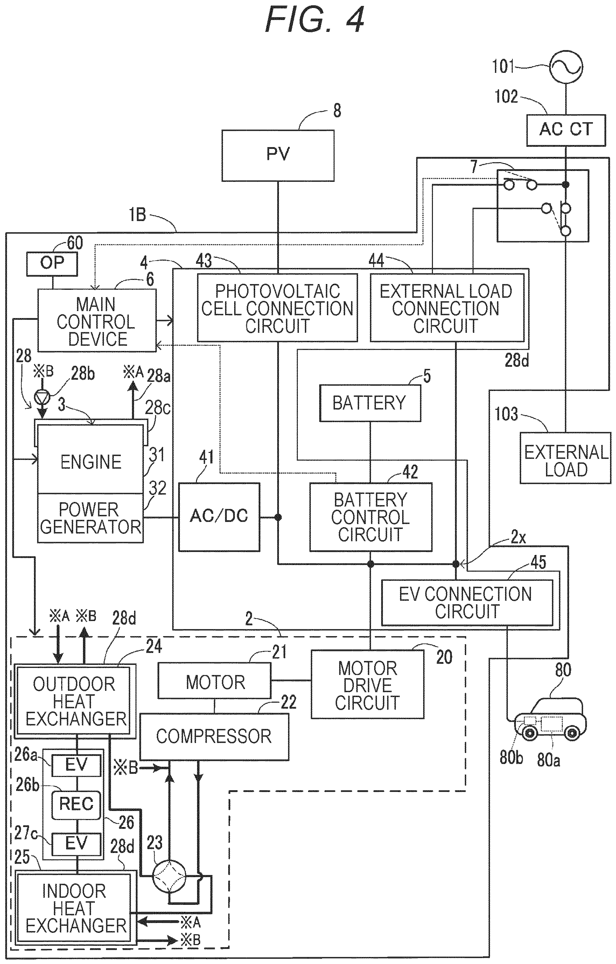

Next, a heat pump device 1B according to a third embodiment will be described with reference to Fig. 4. The heat pump device 1B has a configuration in which an electric vehicle (EV) connection circuit 45 is added to the heat pump device 1A. The EV connection circuit 45 forms part of the power adjustment circuit 4.

The EV connection circuit 45 is an interface circuit electrically connected to a drive battery 80a built in an electric vehicle 80. The drive battery 80a supplies power to a traveling motor of the electric vehicle 80.

The electric vehicle 80 includes an EV battery control circuit 80b that controls the drive battery 80a. The EV connection circuit 45 is connected to the drive battery 80a through the EV battery control circuit 80b.

The EV connection circuit 45 outputs, as the available power, the power supplied from the drive battery 80a to the main conductive unit 2x. In this case, the EV battery control circuit 80b executes an EV discharge control of discharging electricity stored in the drive battery 80a.

Note that the drive battery 80a of the electric vehicle 80 is one example of an external power source. The EV connection circuit 45 is one example of an external power source connection unit that can be electrically connected to the external power source.

The EV connection circuit 45 includes a DC/DC converter that converts an output voltage of the EV battery control circuit 80b into the input voltage of the motor drive circuit 20. The EV connection circuit 45 acquires information on the amount of charge of the drive battery 80a from the EV battery control circuit 80b.

The EV connection circuit 45 executes the EV discharge control in a case where the amount of charge of the drive battery 80a exceeds a preset lower limit and the battery control circuit 42 does not execute the charge control, and stops the EV discharge control otherwise.

For example, the EV connection circuit 45 executes, as the EV discharge control, first EV discharge control or second EV discharge control described below.

The first EV discharge control is a processing of outputting, as the available power, preset steady-state power from the drive battery 80a to the main conductive unit 2x.

In a case where the first EV discharge control is executed, the main control device 6 may acquire, from the photovoltaic cell connection circuit 43, information on the amount of power generation from the photovoltaic cell 8, and set the steady-state power to be output from the EV connection circuit 45 according to the amount of power generation from the photovoltaic cell 8. In this case, the main control device 6 sets greater steady-state power in a case where the amount of power generation from the photovoltaic cell 8 is small than a case where the amount is great.

The second EV discharge control is a process of discharging the electricity stored in the drive battery 80a such that the available power and the power consumption of the electric load connected to the main conductive unit 2x are balanced in a case where the amount of charge of the battery 5 falls below the minimum remaining amount and not discharging the electricity from the drive battery 80a otherwise.

In a case where the heat pump device 1B is employed, operation with a higher degree of freedom than that in a case where the heat pump device 1, 1A is employed is achieved.

### [Application Example]

The heat pump device 1A or the heat pump device 1B may have a configuration in which the photovoltaic cell connection circuit 43 or the external load connection circuit 44 is omitted from the configuration shown in Fig. 3 or Fig. 4. Note that in a case where the external load connection circuit 44 is omitted from the configuration, the connection switching circuit 7 is also omitted.

## Claims

1. A heat pump device comprising:
a compressor that pressurizes refrigerant;
an engine;
a power generator driven by the engine; and
a motor that operates with power generated by the power generator and drives the compressor.

2. The heat pump device according to claim 1, further comprising:
a battery; and
a battery control unit capable of selectively executing a charge control of causing the battery to store surplus power obtained by excluding power supplied to a load including the motor from available power including the power generated by the power generator and a discharge control of outputting, as the available power, electricity stored in the battery.

3. The heat pump device according to claim 2, further comprising:
an engine control unit that stops the engine when an amount of charge of the battery exceeds a preset reference range and starts the engine when the amount of charge falls below the reference range while the engine is stopped.

4. The heat pump device according to claim 2 or 3, further comprising:
an external power source connection unit that is electrically connectable to an external power source and is capable of outputting, as the available power, power supplied from the external power source.

5. The heat pump device according to claim 4, wherein the external power source is an external power generator that generates power from renewable energy or a drive battery built in an electric vehicle.

6. The heat pump device according to any one of claims 2 to 5, further comprising:
an external load connection unit that is electrically connectable to an external load which is the load to which power is supplied from a commercial power source and is capable of supplying, in interconnection with the commercial power source, remaining power obtained by excluding power utilized in the heat pump device from the available power to the external load.

7. The heat pump device according to claim 6, further comprising:
a connection switching circuit that switches, when the power from the commercial power source is stopped, to a disconnection state in which a power supply line of the commercial power source and the external load connection unit are electrically disconnected from each other and a power output line of the external load connection unit and the external load are electrically connected to each other from an interconnection state in which the power supply line of the commercial power source, the power output line of the external load connection unit, and the external load are electrically connected to each other, wherein
the external load connection unit is capable of supplying the available power to the external load when the connection switching circuit is in the disconnection state.

8. The heat pump device according to any one of claims 2 to 7, further comprising:
a first heat exchanger that exchanges heat between the refrigerant and utilization fluid on a refrigerant circulation path extending through the compressor;
a second heat exchanger that exchanges heat between the refrigerant and open fluid on a refrigerant circulation path extending through the compressor and the first heat exchanger;
a refrigerant branching pipe that branches part of the refrigerant from a decompression unit that decompresses the refrigerant between the first heat exchanger and the second heat exchanger on the refrigerant circulation path and guides the branched refrigerant to an inlet of the compressor; and
a battery heat exchange unit that is provided in a middle of the refrigerant branching pipe and exchanges heat between the refrigerant and the battery.

9. The heat pump device according to any one of claims 2 to 7, further comprising:
a first heat exchanger that exchanges heat between the refrigerant and utilization fluid on a refrigerant circulation path extending through the compressor;
a second heat exchanger that exchanges heat between the refrigerant and open fluid on a refrigerant circulation path extending through the compressor and the first heat exchanger;
an engine cooling device that cools the engine by causing coolant to circulate, wherein
the engine cooling device further exchanges heat between the coolant having exchanged heat with the engine and the second heat exchanger.
